# FASCICULE DE BREVET EUROPEEN

(11) **EP 0 673 897 B1**
(45) Date de publication et mention de la délivrance du brevet: **12.08.1998**
(21) Numéro de dépôt: 95400523.7
(22) Date de dépôt: 13.03.1995
(51) Int. Cl.: C04B 14/06, C04B 40/00, C04B 20/02

(54) **Coulis d'injection pour enrober une armature, notamment une armature de précontrainte**
Injektionsschlamm für die Beschichtung einer Bewehrung, insbesondere einer Vorgespannten Bewehrung
Injection grout for the coating of a reinforcement, particularly for a pre-stressed reinforcement

(30) Priorité: 21.03.1994 FR 9403261
(43) Date de publication de la demande: 27.09.1995
(73) Titulaire: RHODIA CHIMIE, 92408 Courbevoie Cédex (FR); BOUYGUES, 78061 Saint-Quentin en Yvelines Cedex (FR)
(72) Inventeur: Dugat, Jérôme, F-78180 Montigny le Bretonneux (FR); Frouin, Laurent, F-94240 l'Hay les Roses (FR); Prat, Evelyne, F-93500 Pantin (FR); Richard, Pierre, F-92200 Neuilly sur Seine (FR)
(74) Mandataire: Delenne, Marc

(56) Documents cités:
- EP-A- 0 010 777
- EP-A- 0 289 720
- EP-A- 0 291 108
- DE-A- 3 522 677

## Description

L'invention concerne un coulis, à base de ciment et d'eau, destiné à être injecté pour enrober une armature, notamment une armature de précontrainte.

L'enrobage d'une armature de précontrainte est d'autant plus difficile à réaliser de façon satisfaisante que la longueur à enrober est plus grande, sachant que cette longueur peut atteindre 10 à 15 mètres dans le cas d'un cable en hauteur, et plusieurs centaines de mètres dans le cas d'un câble longitudinal.

Un but de la présente invention est de faciliter la mise en oeuvre d'un coulis d'injection.

Un autre but de l'invention est de diminuer le ressuage.

Encore un but de l'invention est de diminuer les risques de fragilisation de l'acier de l'armature par le coulis durci.

Selon l'invention, pour faciliter la mise en oeuvre du coulis d'injection et diminuer le ressuage, on incorpore au coulis environ 1,5 à 3 % en poids (par rapport au poids de ciment) de particules hydrophiles, inertes vis à vis des liquides, ayant une surface spécifique supérieure à environ 200 m²/g et aptes à se fractionner pendant le mélange et / ou l'injection, en multiples fragments dont la grosseur peut être aussi petite que 5 nanomètres et aussi grosse que 300 nanomètres.

On peut par exemple employer des particules dont la surface spécifique est comprise entre 210 et 300 m²/g.

Par surface spécifique, on entend ici la surface spécifique BET, qui est notamment déterminée par la méthode de BRUNAUER-EMMET-TELLER décrite dans "The Journal of the American Chemical Society", vol. 60, page 309, février 1938 et correspondant à la norme ISO 5794/1 (annexe I).

De préférence, on utilise des particules dont la taille avant fractionnement est en moyenne inférieure à 20 micromètres, de préférence inférieure à 15 micromètres, encore mieux dans l'intervalle 0,3-1,5 micromètres, typiquement de l'ordre de 0.5 micromètres.

Parmi les matières ayant les caractéristiques ci-dessus, on préfère les matières de nature siliceuse, soit typiquement un additif constitué de particules de silice précipitée.

Par silice précipitée, on entend ici une silice obtenue par précipitation à partir de la réaction d'un silicate alcalin avec un acide en général inorganique à un pH adéquat au milieu de précipitation, en particulier un pH basique, neutre ou peu acide ; le mode de préparation de la silice peut être quelconque (addition d'acide sur un pied de cuve de silicate, addition simultanée totale ou partielle d'acide et de silicate sur un pied de cuve d'eau ou de solution de silicate, etc...) et est choisi en fonction du type de silice que l'on souhaite obtenir, de façon en soi connue.

La silice précipitée peut être employée sous forme de poudre (sèche) ou, éventuellement, sous forme de suspension aqueuse (ou bouillie).

On a déjà proposé d'incorporer une silice à un coulis d'injection (FR-A-2 621 036), pour obtenir certains avantages, mais il s'agissait de grains de silice de caractéristiques physico-chimiques significativement différentes de celles des grains d'une silice précipitée convenant selon la présente invention.

L'additif utilisé selon la présente invention est ajouté à un coulis de ciment dont la composition peut être classique en soi, et les proportions de cet additif par rapport au poids de ciment n'est pas critique, sinon que l'on obtient des résultats remarquables avec une proportion de 2 à 3 kg de silice précipitée pour 100 kg de ciment.

Le coulis de ciment, outre l'additif ajouté selon l'invention, comportera habituellement d'autres additifs usuels, comme un retardateur, un fluidifiant, etc..

### EXEMPLE

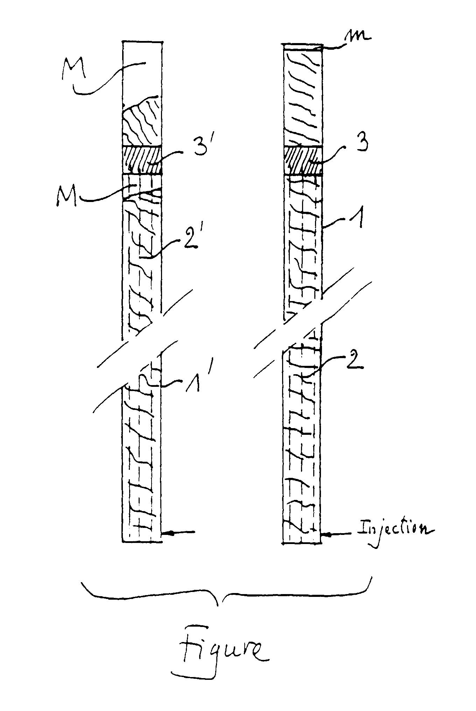

On décrira ci-après un exemple de mise en oeuvre de l'invention en référence à la figure unique du dessin joint qui représente deux tubes d'injection contenant respectivement un coulis conforme à l'invention et un coulis conventionnel, et des armatures.

On prépare un coulis en mélangeant les constituants ci-après selon le processus suivant :

- A 43 litres d'eau, on ajoute 4,9 litres d'un agent fluidifiant ("Melmentplast 40" de la Société SKW), 1,6 litres d'un retardateur ("Melretard" de la Société SKW).

Le mélange se fait dans la partie malaxage d'une machine à injecter (VSL Mixer).

A la partie liquide, on ajoute 150 kg de ciment (CPA HP PM du Havre de la Société Ciments Lafarge), et 3,75 kg de silice précipitée (Tixosil T³³¹ de la Société Rhône-Poulenc), laquelle présente une surface spécifique d'environ 250 m²/g.

Après trois minutes de mélange, le coulis obtenu présente les caractéristiques suivantes :

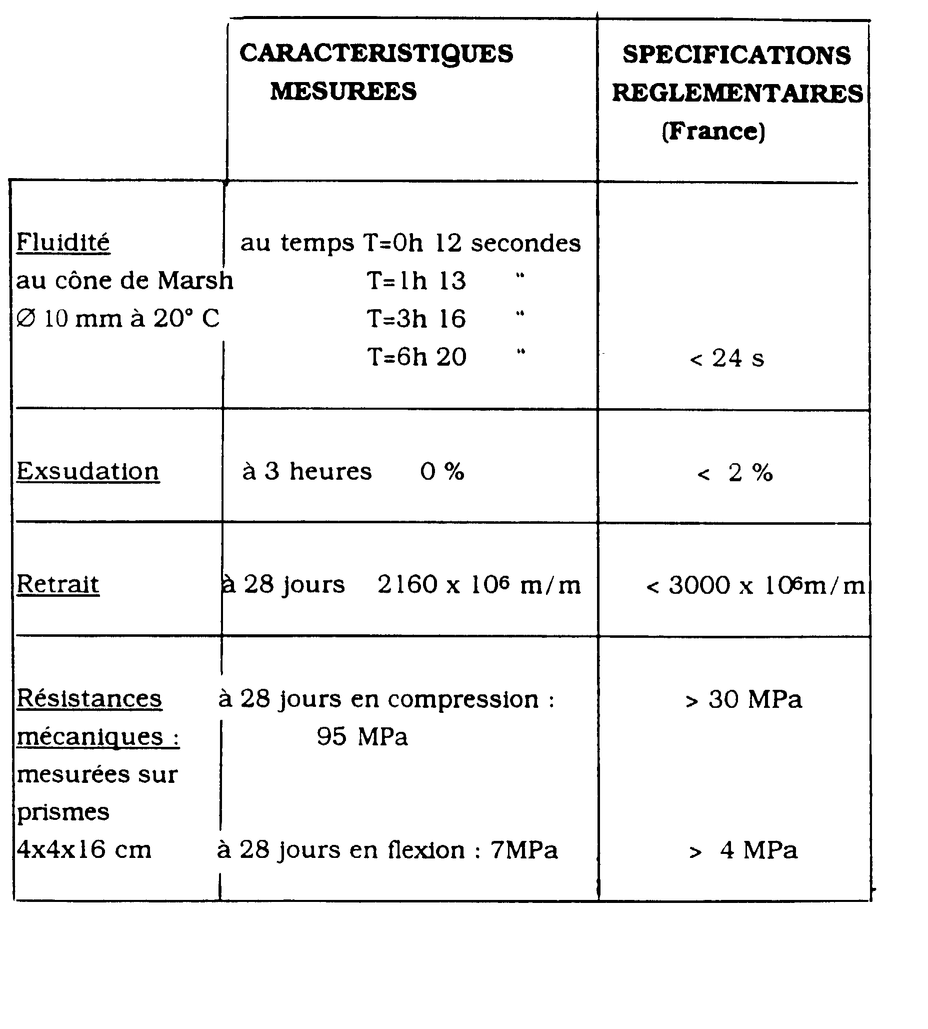

- Le mélange fabriqué suivant l'exemple ci-dessus reste fluide pendant trente heures : cette durée est modulable suivant l'utilisation, en modifiant la quantité de retardateur, notamment s'il s'agit d'injection de câbles de précontrainte et suivant leur longueur.

Le coulis avec silice précipitée ne décante pratiquement pas et permet d'assurer un bon enrobage des ancrages des câbles précontrainte, là où un coulis classique nécessiterait une reprise d'injection difficile.

On injecte ce coulis avec une pression de 5 bars à la base d'un tube transparent vertical (1) de 4,5m, contenant des torons (2) et un ancrage (3) de ces torons en tête du tube. Dans un tube identique (1') on injecte un coulis classique du commerce. Après plusieurs heures on compare les deux tubes.

On constate des manques d'enrobage M sur 7 cm sous l'ancrage et 17 cm au-dessus de l'ancrage dans le cas du coulis classique, dans des zones où un excellent enrobage est particulièrement requis, alors que l'enrobage ne présente qu'un manque m tout à fait minime (de 1 cm) éloigné de l'ancrage.

Des câbles de précontrainte de vingt mètres de haut ont été injectés sur un chantier, et ont confirmé les essais en laboratoire : le coulis est resté homogène pendant l'injection et n'a quasiment pas décanté ensuite, contrairement au produit prêt à l'emploi du commerce prévu pour l'ensemble du chantier, déjà délavé en haut du câble au moment de l'injection, et qui a nécessité des suppléments d'injection sur plusieurs câbles.

On notera que par rapport à la fumée de silice dont l'emploi a déjà été envisagé, la silice précipitée présente notamment les avantages suivants :
a) la silice précipitée permet de mieux fixer l'eau et donc de diminuer très sensiblement le ressuage qui est l'une des principales difficultés pour l'injection autour des câbles ;
b) en raison de l'absence de silicium libre dans la silice précipitée, il ne se produit pas d'hydrogène naissant ;
c) à performances égales (décantation et exsudation), la quantité requise de silice précipitée est sensiblement inférieure à la quantité de fumée de silice qui serait nécessaire ;
d) il est possible de choisir la silice précipitée qui convient pour obtenir une fluidité et une thixotropie souhaitées, puisqu'il existe toute une gamme de production de silice précipitée, alors qu'un tel choix n'est pas possible dans le cas de la fumée de silice qui est disponible en tant que sous-produit.

L'invention n'est pas limitée à ces exemples qui n'ont été données qu'à titre d'illustration.

## Revendications

1. Coulis d'injection, à base de ciment et d'eau, pour l'enrobage d'une armature, caractérisé en ce qu'il comporte environ 1,5 à 3 % en poids (par rapport au poids de ciment), de particules hydrophiles, inertes vis à vis des liquides, ayant une surface spécifique supérieure à environ 200 m² / g et aptes à se fractionner pendant le mélange et / ou l'injection, en multiples fragments dont la grosseur peut être aussi petite que 5 nanomètres et aussi grosse que 300 nanomètres.

2. Coulis d'injection selon la revendication 1, caractérisé en ce que les particules avant incorporation au coulis ont une taille en moyenne inférieure à 20 micromètres.

3. Coulis d'injection selon la revendication 2, caractérisé en ce que les particules avant incorporation au coulis ont une taille en moyenne inférieure à 15 micromètres.

4. Coulis d'injection selon la revendication 3, caractérisé en ce que les particules avant incorporation au coulis ont une taille en moyenne comprise dans l'intervalle 0,3 - 1,5 micromètres.

5. Coulis d'injection selon l'une des revendications 1 à 4, caractérisé en ce qu'on utilise des particules de silice précipitée.

6. Application d'un coulis selon l'une des revendications 1 à 5 à l'enrobage d'une armature de précontrainte.

## Patentansprüche

1. Spritzvergußmasse auf Basis von Zement und Wasser, zur Ummantelung einer Armierung, dadurch gekennzeichnet, daß sie etwa 1,5 bis 3 Gewichtsprozent (berechnet auf das Zementgewicht) hydrophile, gegenüber Flüssigkeiten inerte Teilchen umfaßt, welche eine spezifische Oberfläche von etwa größer 200 m²/g haben und in der Lage sind, beim Vermischen und/oder Verspritzen eine Vielzahl von Fragmenten zu bilden, deren Dicke so klein wie 5 nm und so groß wie 300 nm sein kann.

2. Spritzvergußmasse nach Anspruch 1, dadurch gekennzeichnet, daß die Teilchen vor dem Einbringen in die Vergußmasse eine mittlere Größe von unter 20 µm aufweisen.

3. Spritzvergußmassen nach Anspruch 2, dadurch gekennzeichnet, daß die Teilchen vor dem Einbringen in die Vergußmasse eine mittlere Größer von unter 15 µm aufweisen.

4. Spritzvergußmasse nach Anspruch 3, dadurch gekennzeichnet, daß die Teilchen vor dem Einbringen in die Vergußmasse eine mittlere Größe im Bereich von 0,3 bis 1,5 µm aufweisen.

5. Spritzvergußmasse nach einem der Ansprüche 1 bis 4, dadurch gekennzeichnet, daß man Teilchen von Kieselhydrogel verwendet.

6. Verwendung einer Spritzvergußmasse nach einem der Ansprüche 1 bis 5, zur Ummantelung einer Spannbewehrung.

## Claims

1. Injection grout, based on cement and water, for the embedment of a reinforcement, characterized in that it includes approximately 1.5 to 3% by weight (with respect to the weight of cement) of hydrophilic particles, these being inert with respect to liquids, having a specific surface area greater than approximately 200 m²/g and being capable of breaking up during mixing and/or injection into multiple fragments whose size may be as small as 5 nanometres and as large as 300 nanometres.

2. Injection grout according to claim 1, characterized in that the particles before incorporation into the grout have an average size of less than 20 micrometres.

3. Injection grout according to claim 2, characterized in that the particles before incorporation into the grout have an average size of less than 15 micrometres.

4. Injection grout according to claim 3, characterized in that the particles before incorporation into the grout have an average size lying within the 0.3 - 1.5 micrometre range.

5. Injection grout according to one of claims 1 to 4, characterized in that particles of precipitated silica are used.

6. Application of a grout according to one of claims 1 to 5 to the embedment of a prestressing tendon.
